# EUROPÄISCHE PATENTSCHRIFT

(11) **EP 1 612 117 B1**
(45) Veröffentlichungstag und Bekanntmachung des Hinweises auf die Patenterteilung: **28.02.2007**
(21) Anmeldenummer: 05013874.2
(22) Anmeldetag: 28.06.2005
(51) Int. Cl.: B61H 11/00, B60T 8/56

(54) **Sandungseinrichtung für Schienenfahrzeuge -Verfahren und Fahrzeug dazu**
Rail vehicle sanding device, -method and vehicle therefor
Dispositif de sablage pour véhicules ferroviaires, véhicule et procédé correspondant

(30) Priorität: 28.06.2004 DE 102004031219
(43) Veröffentlichungstag der Anmeldung: 04.01.2006
(73) Patentinhaber: KNORR-BREMSE Systeme für Schienenfahrzeuge GmbH, 80809 München (DE)
(72) Erfinder: Knoss, Rainer, 80637 München (DE); Haselsteiner, Kurt, 1120 Wien (AT)

(56) Entgegenhaltungen:
- US-A- 2 257 310
- US-A- 2 270 110
- US-A- 2 275 647
- US-A- 2 447 713

## Beschreibung

Die Erfindung betrifft eine Sandungseinrichtung für Fahrzeuge, insbesondere Schienenfahrzeuge, mit einem Sandbehälter zur Aufnahme von Streusand. Der Sandbehälter weist einen Ausgangsanschluss für ein Sandungsrohr und einen Eingangsanschluss für Druckluft auf. Eine betätigbare Druckluftspeiseeinrichtung ist mit dem Eingangsanschluss verbunden.

Um den Haftwert zwischen Rädern und Fahrbahn bei ungünstigen Fahrbahnverhältnissen zu verbessern, werden Fahrzeuge mit Sandungsanlagen ausgerüstet. Gerade bei Schienenfahrzeugen helfen Sandungsanlagen, bei Notbremsungen den Haftwert zwischen den Rädern und den Schienen in kurzer Zeit stark zu erhöhen.

Der Sand wird dabei über ein Rohr oder durch einen Schlauch vor den Rädern ausgebracht, so dass die Schienenfahrzeuge über eine "gesandete" Schiene mit stark erhöhtem Haftwert abrollen. Wird zu wenig Sand ausgebracht, so wird nicht die volle Wirkung der Haftwertverbesserung erzielt. Wird hingegen zu viel Sand ausgetragen, so ergibt sich auch keine optimale Wirkung.

Um eine optimale Haftwirkung zu erreichen muss der Sand möglichst genau in den Spalt zwischen Rad und Schiene eingebracht werden. Jedoch darf das Sandungsrohr nicht direkt an der Stelle zwischen Rad und Schiene angebracht werden, denn bei einer Abnutzung der Räder könnte das Rohrende ansonsten auf der Schiene schleifen. Würde das Rohrende unterhalb des davor angeordneten Schienenräumers angebracht sein, könnte es durch auf der Schiene befindliche Gegenstände regelmäßig beschädigt werden.

Das Sandungsrohrende muss also immer einen Mindestabstand vom Rad und von der Schiene aufweisen. Wenn jedoch der Sand aus dem vom Rad und von der Schiene in diesem Mindestabstand angeordneten Rohr ausgebracht wird, besteht die Gefahr, dass der Sand weggeblasen wird, bevor er zwischen Rad und Schiene gelangt. Aus dem Stand der Technik ist deshalb bekannt, den Sand mit möglichst hoher Geschwindigkeit aus dem Sandungsrohr gezielt unter das Rad zu blasen.

Dennoch muss das Sandungsrohrende unter Berücksichtigung des vorstehend erläuterten Mindestabstands nahe dem Rad angeordnet werden und ist daher direkt dem vom Rad aufgewirbelten Spritzwasser oder Schnee ausgesetzt. Es besteht somit die Gefahr, dass sich insbesondere im Winter das Rohrende mit Eis und Schnee zusetzt. Um dies zu verhindern, ist aus dem Stand der Technik weiterhin bekannt, Sandungsrohrheizungen am Ende des Rohres einzusetzen. Zusätzlich kann ein warmer Luftstrom durch das Sandungsrohr das Vereisen verhindern.

Um eine ungestörte Funktion der Sandungseinrichtung zu gewährleisten, muss der Sand über lange Zeit rieselfähig bleiben. Da Sand jedoch hygroskopisch ist und sich im Sandbehälter durch Kondensation immer wieder Wasser abscheidet, kann es besonders im Sommer, wenn lange nicht gesandet wird, dazu kommen, dass sich der Sand zu einem festen Klumpen verbindet und nicht mehr aus dem Sandbehälter befördert werden kann.

Um dies wirkungsvoll zu vermeiden wird beispielsweise bei der von der Anmelderin unter der Typbezeichnung SDN14-1 vertriebenen, nach dem Überdruckprinzip arbeitenden Sandungsanlage der Sandbehälter luftdicht gestaltet und nur mit trockener Luft aus dem Druckluftsystem belüftet. Eine Durchlüftung mit getrockneter und in der kalten Jahreszeit zusätzlich angewärmter Luft hält den Sand zuverlässig rieselfähig. Das Dokument US 2447713 beschreibt den Oberbegriff des Anspruchs 1.

Zum Fördern von Sand aus dem Sandbehälter in das Sandungsrohr wird bei dieser bekannten Sandungsanlage trockene Luft über eine Düse in den Sandbehälter eingeblasen, wobei der Sand über eine Abluftglocke in das Sandungsrohr geblasen wird. Die geförderte Sandmenge kann je nach eingeblasener Luftmenge bzw. anliegendem Luftdruck aus der Druckluftversorgung eingestellt werden.

Bei der bekannten Sandungsanlage müssen das gesamte System und der Sandbehälter druckdicht ausgeführt sein, damit eine bestimmte Sandmenge zuverlässig gefördert werden kann. Durch Undichtigkeiten im System, insbesondere im Bereich der Nachfüllöffnung des Sandbehälters kann jedoch die eingeführte Druckluft entweichen. Bestehende Behälter oder Sandklappen sind häufig nicht druckdicht ausgeführt, so dass eine Nachrüstung mit der bekannten Sandungsanlage schwierig ist.

Aus dem Stand der Technik sind weiterhin Sandungsanlagen bekannt, die nach dem Unterdruckprinzip arbeiten und bei denen das System nicht druckdicht ausgebildet ist. Durch zwischen dem Sandauslass des Sandbehälters und dem Sandungsrohr angeordnete Düsen wird nach Art einer Wasserstrahlpumpe mit Druckluft ein Unterdruck erzeugt, der Sand aus dem Sandbehälter absaugt. Der Sand gerät dann in den im Sandungsrohr ausgebildeten Luftstrom und wird mit Ihm zum Ende des Sandungsrohres befördert. Bei dieser bekannten Anordnung benötigt der Sandbehälter Belüftungsöffnungen, da bei einer druckdichten Ausführung sonst im Sandbehälter ein nicht erwünschter Unterdruck entstehen würde, wodurch das Fördern von Sand aus dem Sandbehälter behindert oder unmöglich gemacht wird. Durch die Belüftungsöffnungen wird jedoch beim Sanden ungetrocknete Außenluft angezogen, die den Sand anfeuchten kann und somit die vorstehend beschrieben Verklumpungsprobleme des Sandes auftreten können.

Es ist daher Aufgabe der Erfindung, eine Sandungseinrichtung bereitzustellen, die einfach aufgebaut und sehr betriebssicher ist. Weiterhin soll die erfindungsgemäße Sandungseinrichtung auch problemlos nachrüstbar sein.

Diese Aufgabe wird durch den Gegenstand der unabhängigen Patentansprüche gelöst. Vorteilhafte Weiterbildungen ergeben sich aus den jeweiligen abhängigen Patentansprüchen.

Demgemäß ist am Ausgangsanschluss oder in einem Bereich des Sandungsrohrs eine Saugöffnung angeordnet, an der eine betätigbare Unterdruckerzeugungseinrichtung angeschlossen ist, die auch nach dem Prinzip der Unterdrucksandung arbeiten kann. Vorzugsweise erfolgt dies an einer Stelle des Sandungsgeräts bzw. der Sandungsanlage, an der schon Sand gefördert wird. Der Sand kommt aus dem Sandbehälter und wird dann in der Beschleunigungs- und Druckerhöhungsdüse beschleunigt und mit hohem Druck unter die Räder geblasen. Dabei wird über die Düsen der Sandungsanlage die Strömungsgeschwindigkeit so eingestellt, dass durch das Unterdruck-System der Anlage gerade so viel Luft aus dem Sandbehälter gezogen wird, wie durch das Überdruck-System eingeblasen wird. So wird erfindungsgemäß insgesamt ein Gleichdrucksystem bereitgestellt, bei dem eine druckdichte Ausbildung des Systems nicht funktionsnotwendig ist. Gegenüber bekannten Sandungsanlagen tritt der Sand mit einer hohen Geschwindigkeit und ggf. mit höherem Druck aus. Damit kann man auch bei hoher Fahrzeuggeschwindigkeit besser auf die Räder des Fahrzeugs zielen.

Der Sandbehälter kann luftdicht abgeschlossen sein, wodurch gewährleistet ist, dass keine feuchte Luft eindringen kann. Da aber kein Überdruck zur Förderung mehr nötig ist, muss der Behälter nicht unbedingt druckdicht sein. Es kann also auch bei undichten Behältern oder Sandklappen Sand gefördert werden und dieser bleibt trotzdem trocken, weil keine feuchte Umgebungsluft angesaugt wird. Auch die Sandmenge kann weiterhin über den Eingangsdruck der Sandungsanlage eingestellt werden, und zwar ohne bewegte Teile im Sandbehälter.

Im Gegensatz zu Anlagen des Standes der Technik muss das Sandungsrohr nicht freigeblasen werden, da in einer besonders bevorzugten Ausführungsform zurückbleibende Sandreste im Rohr von einem dauernden Trockenluftstrom rieselfähig gehalten werden. Diese Sandreste werden außerdem mit großem Druck und hoher Luftgeschwindigkeit beim nächsten Sanden ausgeblasen.

Dadurch ergibt sich der Vorteil der besseren Verlegemöglichkeit des Sandungsrohrs und eine geringere Verstopfungsneigung. Das erfindungsgemäße System ist einbaukompatibel zu bestehenden Sandungsanlagen, daher ist eine einfache Nachrüstung möglich.

Die Erfindung ist kompatibel zu ein- und mehrstufigen Sandungsansteuerungen und auch zu stufenlosen Sandmengensteuerungen über Druckregler.

Irgendwelche Nachlaufrelais, wie sie im Stand der Technik nötig waren, um nach dem Stoppen der Sandzufuhr die Förderluft so lange angeschaltet zu lassen, bis alle Sandreste aus dem Schlauch geblasen wurden, sind nicht mehr nötig. Dies ermöglicht bei der Erfindung Sandschlauchverlegungen, bei denen der Sandschlauch sich nicht allein durch die Schwerkraft entleeren muss.

Die Erfindung erlaubt es, eine bewährte Technik einzusetzen, indem kostengünstige Komponenten verwendet werden und wobei eine elektrische oder pneumatische Ansteuerung einer Öffnungsklappe am Auslassanschluss des Sandbehälters vermieden wird.

Bei der Erfindung kann der Sand sehr genau in den Spalt zwischen Rad und Schiene gebracht werden, auch wenn das Sandungsrohr nicht nahe an dieser Stelle endet. Dabei muss beachtet werden, dass bei Abnutzung der Räder das Sandungsrohr nicht auf der Schiene schleift. Außerdem muss bei der Verlegung darauf geachtet werden, dass kein Wasser und im Winter Schnee direkt vom Rad in das Rohr gespritzt wird, damit es nicht verstopfen kann. Das Rohr soll nicht unterhalb eines Schienenräumers angebracht werden, denn sonst würde es regelmäßig beschädigt, wenn das Fahrzeug über einen Gegenstand fährt, der auf der Schiene liegt. Das Sandungsrohr muss also immer einen Mindestabstand vom Rad haben.

Eine erfindungsgemäß verbesserte Ausbringung kann dadurch erreicht werden, dass der Sand mit möglichst hoher Geschwindigkeit aus dem Sandungsrohr unter das Rad geblasen wird. Tritt der Sand dann aus dem Rohr aus, besteht nicht die Gefahr, dass der Sand weggeblasen wird, bevor er unter das Rad kommen kann.

Mit der Erfindung bleibt der hygroskopische Sand auch besonders im Sommer, wenn lange nicht gesandet wird und wenn sich bei anderen Systemen im Sandbehälter durch Kondensation wieder Wasser abscheidet, stets rieselfähig. Es kann nicht dazu kommen, dass sich der Sand zu einem festen Klumpen verbindet und nicht mehr aus dem Sandbehälter befördert werden kann.

Die Erfindung ermöglicht es auch, ein Sandungsrohr bereitzustellen, das nicht auf seiner gesamten Länge ein sehr hohes Gefälle aufweist. Der Sandbehälter braucht auch nicht direkt über dem Ende des Fallrohres angebracht werden. Dadurch wird Gestaltungsfreiheit beim Einbau der Sandungsanlage geschaffen.

Die Erfindung kann schräg angeordnete Düsen vorsehen, durch die mit Druckluft ein Unterdruck erzeugt wird, der wenigstens einen Teil des Luftstroms aus dem Sandbehälter ansaugt. Der wird dann zum Ende des Sandungsrohrs befördert. Im Sandbehälter entsteht kein Unterdruck, so dass der Sandbehälter keine Belüftungsöffnungen nach außen benötigt. Dadurch wird vermieden, dass beim Sanden ungetrocknete Außenluft angezogen wird, die den Sand anfeuchten kann.

Vielmehr wird in den Sandbehälter getrocknete Luft eingeblasen, von der ein Teil über eine Abluftglocke in das Sandungsrohr gelangt und von der ein anderer Teil Sand mit sich reißt, der auch in das Sandungsrohr gelangt. Je nach Luftmenge und damit Luftdruck aus der Versorgung über eine Düse kommt mehr oder weniger Sand aus der Anlage. Auf diese Weise kann die Sandmenge gut eingestellt werden.

Über eine kleine Düse kann zusätzlich dauernd Trockenluft in den Sandbehälter geleitet werden. Diese kleine Luftmenge reißt keinen Sand mit sich, trocknet aber ständig den Sand.

Im Winter kann - auch wenn nicht gesandet wird - zusätzlich ständig angewärmte Luft durch das Sandungsrohr geleitet werden, dann kann das Sandrohrende nicht vereisen. Das System und der Sandbehälter braucht hierfür nicht druckdicht ausgeführt werden. Bestehende Behälter oder Sandklappen sind häufig nicht druckdicht, was eine Nachrüstung mit der Erfindung begünstigt.

Die Erfindung arbeitet vorzugsweise mit getrockneter Luft aus dem Hochdrucksystem des Fahrzeugs, wodurch eine Trocknung und Auflockerung des Sandes im Sandbehälter erfolgt. Es werden keine bewegten Teile im Sand vorgesehen, womit erhöhter Wartungsaufwand vermieden wird.

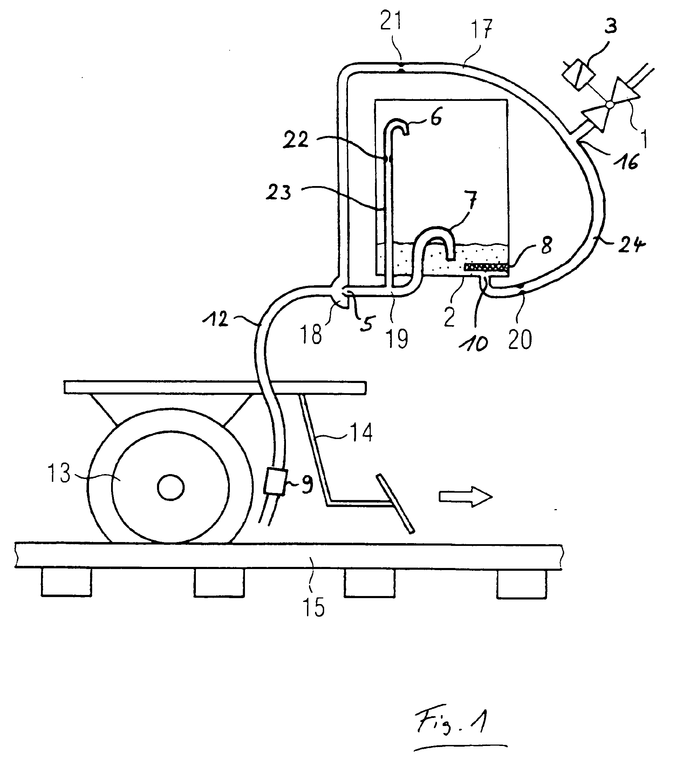

Figur 1 zeigt in vereinfachter schematischer Seitenansicht ein Ausführungsbeispiel einer nach der Erfindung ausgebildeten Sandungseinrichtung für ein Schienenfahrzeug.

Von dem Schienenfahrzeug ist in Figur 1 nur ein Rad 13 mit einem davor angeordneten Schienenräumer 14 auf einem Schienenabschnitt 15 gezeigt. Zum genauen Aufbringen des Sandes in den Zwischenraum zwischen dem Rad 13 und der Oberfläche des Schienenabschnitts 15 ist das Ende eines Sandungsrohres 12 in einem vorgegebene Abstand zum Rad 13 und zum Schienenabschnitt 15 angeordnet und auf das Rad 13 und den Schienenabschnitt 15 ausgerichtet. Das Sandungsrohr 12 ist einseitig an einem Ausgangsanschluss 7 des Sandbehälters 2 angeschlossen. Das nahe dem Rad 13 angeordnete andere Ende des Sandungsrohres 12 weist eine elektrisch betriebene Sandungsrohrheizung auf, die ein Vereisen im Winter verhindert. Der Begriff "Sandungsrohr" soll alternativ und verallgemeinert auch eine schlauchförmige Sandungsleitung, also einen "Sandungsschlauch" umfassen.
An einem Druckminderventil 1 liegt der in einer Druckluftleitung einer Druckluftanlage eines Schienenfahrzeugs zur Verfügung gestellte Druckluft an, die bereits durch die Druckluftanlage des Schienenfahrzeugs getrocknet ist. Ein nicht gezeigtes Sandungssteuergerät steuert ein mit dem Druckminderventil 1 verbundenes Magnetventil 3 an, welches wiederum das Druckminderventil 1 durch eine elektrisch erregbare Spule gegen den Druck einer Feder betätigt. Je nach dem vom Sandungssteuergerät am Magnetventil 3 angelegten Steuersignal wird das Druckminderventil 1 mehr oder weniger weit geöffnet oder geschlossen.

Die vom Druckminderventil 1 eingesteuerte Druckluft wird über eine Versorgungskammer 24 zum Eingangsanschluss 10 des Sandbehälters 2 geleitet und strömt über eine vor dem Eingangsanschluss 10 angeordnete Eingangsdüse 20 in den Sandbehälter 2 ein. Die Eingangsdüse 20 ist als eine Engstelle mit definiertem Düsenquerschnitt ausgebildet. Am Eingangsanschluss 10 ist innerhalb des Sandbehälters 2 eine elektrisch betriebene, als durchströmbare Heizmatte ausgebildete Sandbehälterheizung 8 angeordnet, die insbesondere im Winter zur Erwärmung der einströmenden Luft dient.

Zwischen dem Druckminderventil 1 und dem Eingangsanschluss 10 des Sandbehälters 2 ist eine T-förmige Kammer 16 angeordnet, von der wiederum eine Versorgungskammer 17 zu einer Unterdruckdüse 18 abzweigt, die mit dem Sandbehälter 2 über eine Saugöffnung 5 verbunden ist. Die Saugöffnung 5 ist dabei über eine Unterdruckkammer 19 mit dem Ausgangsanschluss 7 des Sandbehälters 2 verbunden. Die Unterdruckdüse 18 weist in Strömungsrichtung weisende, schräg gestellte Düsenöffnungen auf, die nach Art einer Wasserstrahlpumpe mit Druckluft an der Saugöffnung 5 und somit in der Unterdruckkammer 19 einen Unterdruck erzeugen, der Sand aus dem Sandbehälter ansaugt. Der Ausgangsanschluss 7 ist nach Art eines Siphons U-förmig ausgebildet und weist ein in Richtung auf den Boden des Sandbehälters 2 weisende Öffnung auf. Mit dieser Anordnung wird sichergestellt, dass nur dann Sand aus dem Sandbehälter in das Sandungsrohr gelangt, wenn eine vorbestimmte Luftströmung den Siphon durchströmt.

In der Versorgungskammer 17 ist im Bereich zwischen der T-förmigen Kammer 16 und der Unterdruckdüse 18 eine Versorgungsdüse 21 angeordnet, die einen definierten Düsenquerschnitt aufweist. Der Düsenquerschnitt der Eingangsdüse 20 und der Düsenquerschnitt der Versorgungsdüse 21 sind so aufeinander abgestimmt, dass beim Sanden in etwa gerade soviel Luft über die Eingangsdüse 20 in den Sandbehälter 2 gelangt wie Sand und Luft über die Unterdruckdüse 18 aus dem Sandbehälter 2 abgesaugt wird. Der saugende Unterdruck in der Unterdruckkammer 19 entsteht durch den Luftstrom, der sich über die Versorgungsdüse 21 in der Unterdruckdüse 18 einstellt.

Innerhalb des Sandbehälters 2 ist ein zum Inneren des Sandbehälters 2 hin einseitig offenes Abluftrohr 23 vorgesehen, welches an seinem anderen Ende mit der Unterdruckkammer 19 verbunden ist. Die Öffnung des Abluftrohres 23 bildet einen Abluftauslass 6, der oberhalb des mit Sand befüllten Bereiches angeordnet ist, so dass kein Sand durch das Abluftrohr 23 gefördert wird. Innerhalb des Abluftrohres 23 ist eine Abluftdüse 22 angeordnet. Das Abluftrohr 23 dient dazu, dass zwischen dem Eingangsanschluss 10 und dem Abluftauslass 6 stets eine Luftströmung vorherrscht, die den im Sandbehälter 2 befindlichen Sand durchströmt, um ihm aufzulockern und trocken zu halten. Der Düsenquerschnitt der Eingangsdüse 20 und der Düsenquerschnitt der Trocknungsdüse 21 sind deshalb so aufeinander abgestimmt, dass eine derartige Strömung stets aufrechterhalten werden kann. Dabei ist die für das Durchströmen des Sandes ausreichende Luftmenge geringer als die Luftmenge, die für das Fördern von Sand aus dem Ausgangsanschluss 7 notwendig ist.

Der Sand aus dem Sandbehälter 2 wird mit hohem Druck unter das Rad 13 geblasen, nämlich mit der Summe der Luftströme durch die Eingangsdüse 20 und die Versorgungsdüse 21. Dabei ist die Strömungsgeschwindigkeit der transportierenden Druckluft so eingestellt, dass durch das Unterdruck-System 18 der Anlage in etwa gerade so viel Luft über die Unterdruckkammer 19 aus dem Sandbehälter 2 gezogen wird, wie durch den Eingangsanschluss 10 eingeblasen wird. Die Luftmengen können auch um einen optimalen Arbeitspunkt herum von den optimalen Werten abweichen. Im Wesentlichen wird jedoch ein insgesamt Gleichdrucksystem realisiert.

Um den Sand im Sandkasten trocken zu halten, lässt man kontinuierlich geringe Mengen an Druckluft mit wenig Druck über den Eingangsanschluss 10 in den Sandbehälter 2 einströmen. Die einströmende Luft durchströmt den Sand und entweicht zu einem Teil über den Ausgangsanschluss 7 in das Sandungsrohr 12, wobei aufgrund der geringen Luftströmung kein Sand gefördert wird. Auch kann die durchströmende Luft durch den Abluftauslass 6 des Abluftrohres 23 in das Sandungsrohr ausströmen. In welchem Verhältnis zueinander die Luftströmungen durch den Ausgangsanschluss 7 oder den Abluftauslass 6 abströmt, hängt vom Düsenquerschnitt der Abluftdüse 22 ab.

Gemäß einer nicht gezeigten weiteren Ausführungsform kann das Abluftrohr 23 ganz entfallen. Dann wird die trocknende Luftströmung nur über den Ausgangsanschluss 7 in das Sandungsrohr 12 gelenkt.

Um Sand aus dem Sandbehälter zu fördern, lässt man beispielsweise auf Anforderung der Bedieners Druckluft mit wesentlich höherem Druck über den Eingangsanschluss 10 in den Sandbehälter 2 einströmen, so dass im Sandbehälter 2 gelagerter Sand über den Ausgangsanschluss 7 in das Sandungsrohr 12 gelangt. Gleichzeitig wird Luft und Sand am Ausgangsanschluss 7 des Sandbehälters 2 durch den Unterdruck angesaugt, den die Unterdruckdüse 18 mit der aus der Versorgungskammer 17 gelieferten Druckluft an der Unterdruckkammer 19 erzeugt. Die Luft zusammen mit dem geförderten Sand strömen in Richtung Sandungsrohrende. Dabei wird von der Unterdruckdüse 18 in etwa gerade so viel Luft und Sand angesaugt, wie am Eingangsanschluss 10 an Luft in den Sandbehälter 2 eingeblasen wird.

Vorzugsweise werden die Unterdruckdüse 18, die Unterdruckkammer 19, die Eingangsdüse 20 und die Versorgungsdüse 21 als eine bauliche Einheit in einem gemeinsamen Gehäuseblock bereitgestellt, der unterhalb des Sandbehälters 2 angeordnet ist.

### Bezugszeichenliste

- 1: Druckminderer
- 2: Sandbehälter
- 3: Magnetventil
- 5: Saugöffnung
- 6: Abluftauslass
- 7: Ausgangsanschluss
- 8: Sandbehälterheizung
- 9: Sandungsrohrheizung
- 10: Eingangsanschluss
- 12: Sandungsrohr
- 13: Rad
- 14: Schienenräumer
- 15: Schienenabschnitt
- 16: T-förmige Kammer
- 17: Versorgungskammer
- 18: Unterdruckdüse
- 19: Unterdruckkammer
- 20: Eingangsdüse
- 21: Versorgungsdüse
- 22: Abluftdüse
- 23: Abluftrohr
- 24: Versorgungskammer

## Patentansprüche

1. Sandungseinrichtung für Fahrzeuge, insbesondere Schienenfahrzeuge, mit einem Sandbehälter (2) zur Aufnahme von Streusand, wobei der Sandbehälter (2) einen Ausgangsanschluss (7) für ein Sandungsrohr (12) und einen Eingangsanschluss (10) für Druckluft aufweist, und mit einer betätigbaren Druckluftspeiseeinrichtung (1, 3), die mit dem Eingangsanschluss (10) verbunden ist,
**dadurch gekennzeichnet, dass**
am Ausgangsanschluss (7) oder in einem Bereich des Sandungsrohrs (12) eine Saugöffnung (5) angeordnet ist, an der eine betätigbare Unterdruckerzeugungseinrichtung (18) angeschlossen ist.

2. Sandungseinrichtung nach Anspruch 1,
**dadurch gekennzeichnet, dass**
zwischen Ausgangsanschluß (7) und Sandungsrohr (12) eine Beschleunigungs- und Druckerhöhungsdüse vorgesehen ist.

3. Sandungseinrichtung nach Anspruch 1 oder Anspruch 2,
**dadurch gekennzeichnet, dass**
der Sandbehälter (2) luftdicht abgeschlossen ist.

4. Sandungseinrichtung nach einem der vorhergehenden Ansprüche,
**dadurch gekennzeichnet, dass**
zur Betätigung der Druckluftspeiseeinrichtung (1, 3) und der Unterdruckerzeugungseinrichtung (18) eine ein- oder mehrstufigen Sandungsansteuerung vorgesehen ist.

5. Sandungseinrichtung nach einem der vorhergehenden Ansprüche,
**dadurch gekennzeichnet, dass**
die Unterdruckerzeugungseinrichtung (18) eine insbesondere schräg angeordnete Düse zur Erzeugung von Unterdruck mit Druckluft aufweist.

6. Fahrzeug mit einer Sandungseinrichtung nach einem der vorhergehenden Ansprüche

7. Verfahren zum Betreiben eines Sandbehälters einer Sandungseinrichtung für Fahrzeuge, wobei das Verfahren die folgenden Schritte aufweist:
- Einblasen von Druckluft in den Sandbehälter (2), so dass im Sandbehälter (2) gelagerter Sand in ein am Sandbehälter angreifendes Sandungsrohr (12) gelangt,
- Ansaugen von Luft an einem mit dem Sandungsrohr (12) verbundenen Ausgangsanschluss (7) des Sandbehälters (2) derart, dass in etwa gerade so viel Luft angesaugt wird, wie in den Sandbehälter (2) eingeblasen wird.

8. Verfahren nach Anspruch 7,
**dadurch gekennzeichnet, dass**
die Schritte des Einblasens von Druckluft in den Sandbehälter (2) und des Ansaugens von Luft an einem mit dem Sandungsrohr (12) verbundenen Ausgangsanschluss (7) des Sandbehälters (2) im wesentlichen ständig erfolgen.

9. Verfahren nach Anspruch 7,
**dadurch gekennzeichnet, dass**
die Schritte des Einblasens von Druckluft in den Sandbehälter (2) und des Ansaugens von Luft an einem mit dem Sandungsrohr (12) verbundenen Ausgangsanschluss (7) des Sandbehälters (2) selektiv auf ein Anforderungssignal eines Bedieners erfolgen.

## Claims

1. Sanding device for vehicles, in particular rail vehicles, with a sand container (2) to hold sand for strewing, the sand container (2) having an outlet connection (7) for a sanding pipe (12) and an inlet connection (10) for compressed air, and with a compressed air feeder device (1, 3) that can be actuated and is connected to the inlet connection (10),
**characterised in that**
a suction opening (5) is arranged on the outlet connection (7) or in an area of the sanding pipe (12), to which is connected an underpressure-producing device (18) that can be actuated.

2. Sanding device according to Claim 1,
**characterised in that**
an accelerating and pressure-increasing nozzle is provided between the outlet connection (7) and the sanding pipe (12).

3. Sanding device according to Claims 1 or 2,
**characterised in that**
the sand container (2) is hermetically sealed.

4. Sanding device according to any of the preceding claims,
**characterised in that**
to actuate the compressed air feeder device (1, 3) and the underpressure-producing device (18), a one-stage or multi-stage sanding control system is provided.

5. Sanding device according to any of the preceding claims,
**characterised in that**
the underpressure-producing device (18) has a nozzle, in particular positioned obliquely, for the production of a reduced pressure by means of compressed air.

6. Vehicle with a sanding device according to any of the preceding claims.

7. Method for operating a sand container of a sanding device for vehicles, the said method comprising the following steps:
- compressed air is blown into the sand container (2) so that the sand stored in the sand container (2) is propelled to a sanding pipe (12) attached to the sand container,
- air is drawn in at the outlet connection (7) of the sand container (2) connected to the sanding pipe (12) in such manner that approximately as much air is drawn in as has been blown into the sand container (2).

8. Method according to Claim 7,
**characterised in that**
the steps of blowing compressed air into the sand container (2) and drawing air in at an outlet connection (7) of the sand container (2) connected to the sanding pipe (12) take place essentially constantly.

9. Method according to Claim 7,
**characterised in that**
the steps of blowing compressed air into the sand container (2) and drawing air in at an outlet connection (7) of the sand container (2) connected to the sanding pipe (12) take place selectively in response to an operator's command signal.

## Revendications

1. Dispositif de sablage pour des véhicules, en particulier des véhicules sur rails, comportant un conteneur de sable (2), destiné à recevoir du sable à répandre et muni d'un raccord de sortie (7) pour un tube de sablage (12) et d'un raccord d'entrée (10) pour de l'air comprimé, ainsi qu'un dispositif d'alimentation en air comprimé (1, 3) manoeuvrable qui peut être relié au raccord d'entrée (10),
**caractérisé en ce que** sur le raccord de sortie (7) ou dans une zone du tube de sablage (12) il y a une ouverture d'aspiration (5) à laquelle est raccordé un dispositif générateur de dépression (18) manoeuvrable.

2. Dispositif de sablage selon la revendication 1, **caractérisé en ce qu'**une buse d'accélération et d'augmentation de la pression est prévue entre le raccord de sortie (7) et le tube de sablage (12).

3. Dispositif de sablage selon la revendication 1 ou la revendication 2, **caractérisé en ce que** le conteneur de sable (2) a une fermeture étanche à l'air.

4. Dispositif de sablage selon l'une des revendications précédentes, **caractérisé en ce qu'**une commande de sablage à un ou plusieurs étages est prévue pour manoeuvrer le dispositif d'alimentation en air comprimé (1, 3) et le dispositif générateur de dépression (18).

5. Dispositif de sablage selon l'une des revendications précédentes, **caractérisé en ce que** le dispositif générateur de dépression (18) comporte une buse, en particulier oblique, pour produire une dépression à l'aide de l'air comprimé.

6. Véhicule équipé d'un dispositif de sablage d'après l'une des revendications précédentes.

7. Procédé pour faire fonctionner un conteneur de sable d'un dispositif de sablage pour des véhicules, le procédé comprenant les étapes suivantes :
- insuffler de l'air comprimé dans le conteneur de sable (2) de manière que le sable que contient le conteneur de sable (2) parvienne dans un tube de sablage (12) appliqué au conteneur de sable,
- aspirer de l'air sur un raccord de sortie (7) - du conteneur de sable (2) - relié au tube de sablage (12) de telle manière que l'air est aspiré en quantité à peu près égale à celui insufflé dans le conteneur de sable (2).

8. Procédé selon la revendication 7, **caractérisé en ce que** les étapes où on insuffle de l'air comprimé dans le conteneur de sable (2) et où on aspire de l'air sur un raccord de sortie (7) - du conteneur de sable (2) - relié au tube de sablage (12) sont réalisées pratiquement en continu.

9. Procédé selon la revendication 7, **caractérisé en ce que** les étapes où on insuffle de l'air comprimé dans le conteneur de sable (2) et où on aspire de l'air sur un raccord de sortie (7) - du conteneur de sable (2) - relié au tube de sablage (12) sont réalisées sélectivement sur un signal de demande d'un opérateur.
